# EUROPEAN PATENT APPLICATION

(11) **EP 2 719 442 A1**
(43) Date of publication of application: **16.04.2014**
(21) Application number: 12188549.5
(22) Date of filing: 15.10.2012
(51) Int. Cl.: B01D 53/78, B01D 53/14, B01D 53/18, B01D 53/46, F23J 15/04, B01D 53/60, B01D 53/62

(54) **A flue gas purification device**

(71) Applicant: Doosan Lentjes GmbH, 40880 Ratingen (DE)
(72) Inventor: Pelkman, Adri Peter, 59174 Kamen (DE)
(74) Representative: Becker, Thomas

(57) **Abstract**

The invention relates to a flue gas purification device with a scrubber tower, also called a scrubbing tower, a washing tower or an absorption tower.

## Description

The invention relates to a flue gas purification device with a scrubber tower, also culled a scrubbing tower, a washing tower or an absorption tower.

The invention particularly relates to a gas purification device and a corresponding scrubber tower operating with seawater as a liquid to absorb undesired components from the flue gas. That is why said liquid (fluid) is also called an absorbent.

Such a gas purification device, as disclosed in US 6759019 or DE 19527836 A1 further comprises
- at least one flue gas duct (pipe) to supply the flue gas into a lower part of the scrubber tower,
- at least one fluid absorbent line to supply the fluid absorbent into an upper part of the scrubber tower,
- at least one contact space for said flue gas and said fluid absorbent within said lower and/or upper part of the scrubber tower,
- a flue gas exit, extending from the upper part of the scrubber tower,
- a collecting reservoir for said used fluid absorbent, arranged beneath and in fluidic connection with said contact space.

In this context the following dimensions of a typical flue gas purification device should be noted:
- height of the scrubbing tower: 20 to 30m
- inner diameter of the scrubbing tower: 10 to 20m
- inner cross section of the flue gas duct: 5 x 10 m
- flue gas flowing through the scrubbing tower: 1.000.000 to 3.000.000 m^{3/}h
- liquid (absorbent) flowing through the scrubbing tower: 15.000 to 60.000 m³/h

According to WO 2009/014016 A1 and other generic devices the flue gas, which may derive from a power station, is introduced via a flue gas duct into the lower part of the scrubbing tower. The flue gas is introduced in a substantially horizontal flow into the scrubber tower. For constructive reasons this type of flue gas purification device requires a certain distance between the lowermost end of the scrubbing tower and the lowermost part of the flue gas duct, typically being in the range of minimum 1-2m. This is true as well if the lower end section of the duct is designed like an elbow.

From the above it becomes evident that tremendous volumes of gas and liquid are treated in such a device with corresponding engineering costs, costs for energy etc.

It is an object of the invention to provide a gas purification unit of the type mentioned with a less complex construction and/or a less energy demand for the gas purification.

The invention is based on the following perspective: The energy demand is mainly influenced by the pumping head (german: Förderhöhe), i.e. the required head of the pumps to transport the liquid absorbent to the upper part of the contact (reaction) zone in the scrubber tower.

Lowering the overall height of the scrubbing tower (without reducing the height of the space for contacting flue gas and liquid absorbent) could reduce the energy demand and increase the life time of the corresponding pumps.

A reduction in height cannot be realized upstream the level(s) for introducing the fluid absorbent, but it was found that the space between the level of the lowermost part of the wall opening of the scrubber tower, to which the flue gas duct is connected, and the surface level of the liquid in the collecting reservoir (the sump) is a more or less dead spot in view of efficiency of the gas treatment within the device.

Therefore the newly developed device differs from prior art devices inter alia by the arrangement of the flue gas duct, relative to the scrubber tower.

The flue gas duct is arranged in such a way that the flue gas, released from (escaping) the flue gas duct, at first flows in a substantially vertical direction (downwardly) instead of a substantially horizontal direction according to prior art. That means thai - contrary to prior art devices - the flue gas, leaving the flue gas duct at its lower end section, does not directly enter the scrubber tower but at first flows substantially parallel and adjacent to the scrubber tower.

To avoid any loss of flue gas and to (re)direct the flue gas on its further way into the scrubber tower the invention further provides a different design for the collecting reservoir.

The new reservoir differs from prior art constructions by an extended section which horizontally extends over the contact space (arranged above). In other words: While a collecting reservoir (in some embodiments also called sump) for the used fluid absorbent is typically arranged more or less flush with and beneath the scrubber tower, the amended collecting reservoir in accordance with the invention is bigger and covers as well an adjacent area at least being defined by an imaginary vertical downward extension of the flue gas duct.

By these means is becomes possible to direct the flue gas, after leaving the flue gas duct at its lower end, firstly onto the liquid surface within the extended section of the collecting reservoir. The flue gas then flows along a certain distance substantially in a horizontal direction, in contact with or above the fluid level of the collecting reservoir, and finally turns/flows up and into the contact space of the scrubber tower, where it gets in contact with the fluid absorbent. On its further way upwards it then leaves the scrubber tower via a corresponding exit.

This means, that the flow direction of the flue gas within the flue gas duct on its way to the outlet opening of the flue gas duct may be substantially vertical and that any curved or elbowed sections may be avoided at least at the lower end of the duct. The bottom inner surface of the elbowed end-sections according to prior art always required high quality and non-corrosive materials like stainless steel as these parts are subject to thermal attack from the hot flue gases as well as from the cold liquid absorbent spray. The amended design avoids such sections; it is therefore cheaper.

Notwithstanding the probably most important advantage of the amended design is that the overall height of the scrubber tower may be reduced according to the lowered and redesigned outlet opening of the flue gas duct and thus the pumping head is reduced correspondingly, which saves a lot of energy and energy costs. In a typical application the pumping head may be reduced by about 20% from: say 10 to 8 meters.

The enlargement of the collecting reservoir is no relevant cost factor as it is a one-time investment, instead of the running energy costs, and the reservoir/sump is usually made of concrete, i.a. a relatively cheap material.

In its most general embodiment the invention relates to a flue gas purification device comprising the following features:
- a scrubber tower
- at least one flue gas duct to supply the flue gas into a lower part of the scrubber tower,
- at least one fluid absorbent line to supply the fluid absorbent into an upper part of the scrubber tower,
- at least one contact space for said flue gas and said fluid absorbent within said lower and/or upper part of the scrubber tower,
- a flue gas exit, extending from the upper part of the scrubber tower,
- a collecting reservoir for said used fluid absorbent, arranged beneath and in fluidic connection with said contact space,
- the collecting reservoir provides an extended section, which horizontally extends over the contact space,
- the flue gas duct is arranged such that the flue gas, released from the flue gas duct, is directed downwardly toward the extended section of the collecting reservoir before being redirected and entering into said contact space within the scrubber tower.

While the general method of flue gas purification with a fluid absorbent, for example a seawater-based absorbent, remains unchanged, the construction of the device, especially with respect to the flue gas duct and its fluidic connection to the scrubbing tower, are different and thus the flow path of the flue gas on its way from the flue gas duct into the contact space within the scrubbing tower is different.

While in prior art devices the flue gas is fed horizontally and directly from the flue gas duct into the scrubber tower the new device provides some kind of a deviation pathway for the flue gas, which leaves the flue gas duct in a more or less vertical (downwardly oriented) direction and passes the collecting reservoir (over the surface of the liquid in the reservoir/sump) before entering into the scrubber tower.

In this respect the lowermost part of the flue gas duct 12 may be installed directly on top of the associated extension 20e of collecting reservoir 20, thus defining the lowermost position of any outlet opening of the flue gas duct 12 within the device.

Along its way through the scrubber tower the flue gas is brought into contact with the said fluid absorbent, best in a counter flow. Correspondingly the absorbent is introduced into the scrubber tower above the flue gas inlet, e.g. at the middle or upper part of the scrubber tower, thus defining the section between the flue gas entrance into the scrubbing tower and the absorbent inlet as the absorbing zone, which represents the contact zone for said liquid and said flue gas.

According to one embodiment nozzles are arranged along the absorbing zone, by which the fluid absorbent is sprayed as fine particles (droplets) into the absorbing zone (contact space) to provide a preferably large reaction surface with the flue gas to be purified.

The absorbent, also called scrubbing fluid, for example seawater, may absorb and/or chemically react with various components/impurities of the flues gas, such as sulphur oxides and CO₂.

In the following the term "fresh liquid or fresh absorbent" is used for the fluid absorbent introduced into the scrubber tower (with a pH value of about 7,5 to 8,5) while the term "used liquid or used absorbent respectively" characterizes the fluid after its contact with the flue gas (with a pH down to about 3 to 4). As far as reference is made in the following to seawater as such liquid it should be understood that this is only one embodiment of a suitable liquid.

According to one embodiment the flue gas duct extends downwardly and up to the collecting reservoir, i.e. any intermediate construction/installation is avoided so that the overall height of the device may be reduced correspondingly.

The main part of the flue gas duct may extend in a substantially vertical direction alongside the scrubber tower. This is a favourite design as for compactness of the device and a desired short duct length.

One alternative within the aforementioned embodiment is to arrange the main part of the flue gas duct at a distance to and alongside the scrubber tower in order to allow easy accessibility.

This design can be realized with a device wherein the flue gas duct has a rectangular cross-section with three long sides and one (fourth) side, shortened at a lower end of the flue gas duct, being the side closest to the contact space.

This design leads to the following flow pattern of the flue gas before moving upwardly into the scrubbing tower: the flue gas leaves the gas duct in a vertical downward flow, then impacts the liquid surface within the collecting reservoir (tank) and further flows a certain distance, substantially corresponding to the distance between flue gas duct and scrubber tower wall, horizontally along said liquid surface towards that part of the collecting reservoir beneath the scrubbing tower.

It is even more effective if the three long sides are mounted on an tipper outer rim of the collecting reservoir, or - generally speaking - if the lower end of the flue gas duct is as close as possible to the upper rim of the collecting reservoir as this minimizes the overall height of the scrubbing tower to its best.

While the flue gas duct is best made of metal the collecting reservoir can be made of a much cheaper material like concrete.

The collecting reservoir can be designed as a discrete basin, similar to a so-called sump in accordance with prior art. This basin has an outlet opening for drainage purposes.

A favourite alternative is to design the collecting reservoir as part of a flow-through channel. Such a flow through channel, by which fresh seawater absorbent may be transported to the device and through the "sump area" (the collecting reservoir) and further back to sea has the following advantages:
- fresh seawater may be taken from the channel at a place in front of the gas purification device and delivered via said fluid absorbent lines to the contact space within the scrubber tower
- fresh seawater also enters the collecting reservoir and mixes up with the used absorbent liquid, thus increasing the overall pH in this part of the device correspondingly,
- One channel serves all seawater functions.

Although other technologies are possible one embodiment provides that the fluid absorbent lines lead to one or more levels of spray nozzles, arranged in or above the contact space.

Such spray nozzles or other means for distributing the absorbent may also be installed in the vertical part of the flue gas duct (or along any distance between flue gas duct and scrubber tower) providing one or more pre-punfying section(s) within the device. This is possible as - according to the new design - the liquid droplets do not fall any more onto the bottom of the internal surface of the flue gas duct, but may now fall directly into the contacting reservoir or its extension respectively.

Insofar one further embodiment relates to a device with no installations/fixtures/walls between the outlet opening of the flue gas duct and the adjacent liquid surface of the collecting reservoir or its extension respectively.

The flue gas purification device according to the invention includes an embodiment, wherein the collecting reservoir extends at least over a horizontal cross section, corresponding to the horizontal cross section of the scrubber tower plus the horizontal cross-section of said flue gas duct, as further disclosed in the attached drawing.

The drawing further illustrates an embodiment wherein the scrubber tower and the flue gas duct extend vertically from said collecting reservoir.

The collecting reservoir may comprise aeration means for said fluid absorbent and/or aeration means may be arranged in subsequent treatment zones.

Further features of the invention will derive from the further applications documents and the sub-claims. They may be combined arbitrarily if appropriate according to the skilled technician and not excluded otherwise.

The invention will now be described by way of examples and according to the attached schematic drawing, wherein
Fig. 1 is a schematic illustration of a first embodiment of a flue gas purification device
Fig. 2 is a schematic illustration of a second embodiment of a flue gas purification device
Fig. 3 is a schematic illustration of a third embodiment of a flue gas purification device
Fig. 4 is a schematic illustration of a fourth embodiment of a flue gas purification device
wherein construction elements representing the same or similar function are marked by identical numerals.

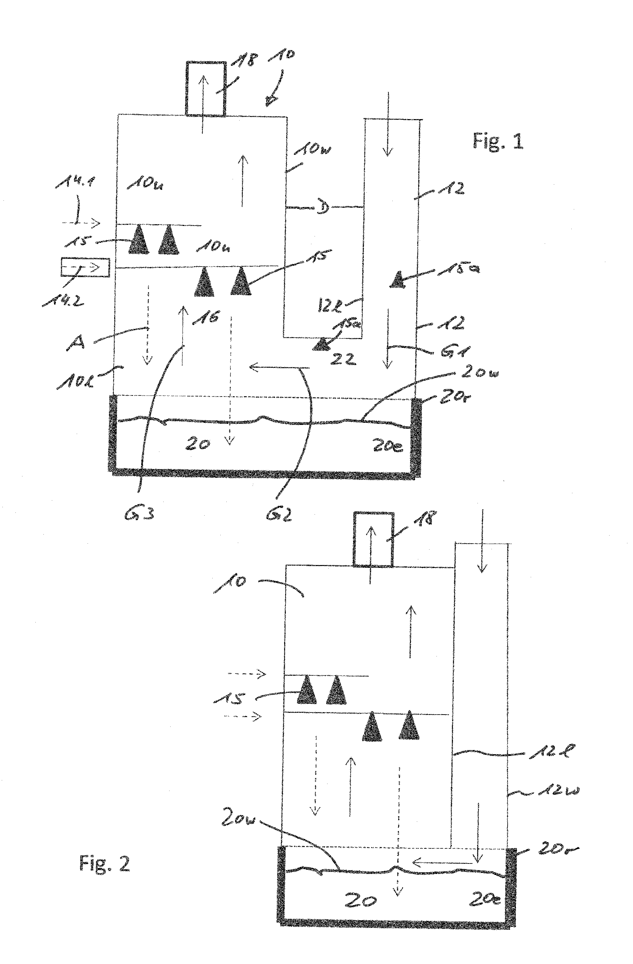

The gas purification unit according to Fig. 1 comprises:
- a scrubber tower 10
- one flue gas duct 12 of rectangular cross section to supply the flue gas into a lower part 10l of the scrubber tower 10,
- two fluid absorbent lines 14.1,14.2 to supply a seawater absorbent via nozzles 15 at different levels into an upper part 10u of the scrubber tower 10, wherein the flow direction of the seawater absorbent is shown by arrows A,
- a contact space 16 for said flue gas and said fluid absorbent within said lower and upper part 10l, log of the scrubber tower 10,
- a flue gas exit 18, extending from the upper part 10u of the scrubber tower 10,
- a collecting reservoir 20 for said used fluid absorbent (after contact in a counter flow with the flue gas), arranged beneath and in fluidic connection with said contact space 16,
- the collecting reservoir 20 provides an extended section 20e (to the right in Fig. 1), which horizontally extends over the said contact space 16, as said contact space 16 is limited at its right end by outer wall 10w (an its imaginary downward extension) of scrubber tower 10,
- the flue gas duct 12 is designed and arranged such that the flue gas, released from the flue gas duct 12, is directed downwardly (arrow G1) toward the extended section 20e of the collecting reservoir 20 before being redirected (arrow G2) to the left by and along seawater surface 20w within said collecting reservoir 20 and further redirected upwardly and entering into said contact space 16 within scrubber tower 10 (arrow G3),
- the main part of the flue gas duct 12 runs at a distance D and substantially parallel to the outer wall 10w of scrubber tower 10 downwardly and up to the level of the collecting reservoir 20 and its extension 20e,
- the flue gas duct 12 is mounted by three of its four walls 12w onto an upper rim 20r of said collecting reservoir 20 (made of concrete), or more precisely: onto an upper rim of the extension 20e of said collecting reservoir 20, while the fourth wall (in Fig. 1: the left wall 121) is shortened and ends at a distance to said rim 20r, thus providing a passage 22 between the flue gas duct 12 and the scrubber tower 10, which passage 22 is further defined by the liquid surface 20w of the absorbent present in the collecting reservoir 20.

By these means a flue gas purification device is defined which enables to lower the level for introducing the fluid absorbent by about 2m compared with prior art devices as mentioned above and characterized by a flue gas duct which directly enters the scrubber tower at about 2 m apart from the upper end of said collecting reservoir.

Correspondingly the invention enables to make the whole scrubbing tower 2m shorter, without any amendments to the contact space 16.

As may be seen from Fig. 1 the outlet opening of flue gas duct 12 is designed such that the flue gas flows further downwardly up to the liquid surface 20w, without any installations in between, It is therefore avoided to use stainless steel or other non-corrosive materials at the lower end of the flue gas duct 12 as any liquid droplets will directly fall into the collecting reservoir(s) 20, 20e, even if further nozzles (symbolized by 15a) are installed within the flue gas duct 12 and/or along said passage 22, and further liquid absorbent being introduced along said duct 12 and/or passage 22 into said flue gas stream.

According to Fig. 1 the collecting reservoir 20 is a discrete basin with a (non-illustrated) outlet opening at the lower end of its left side wall.

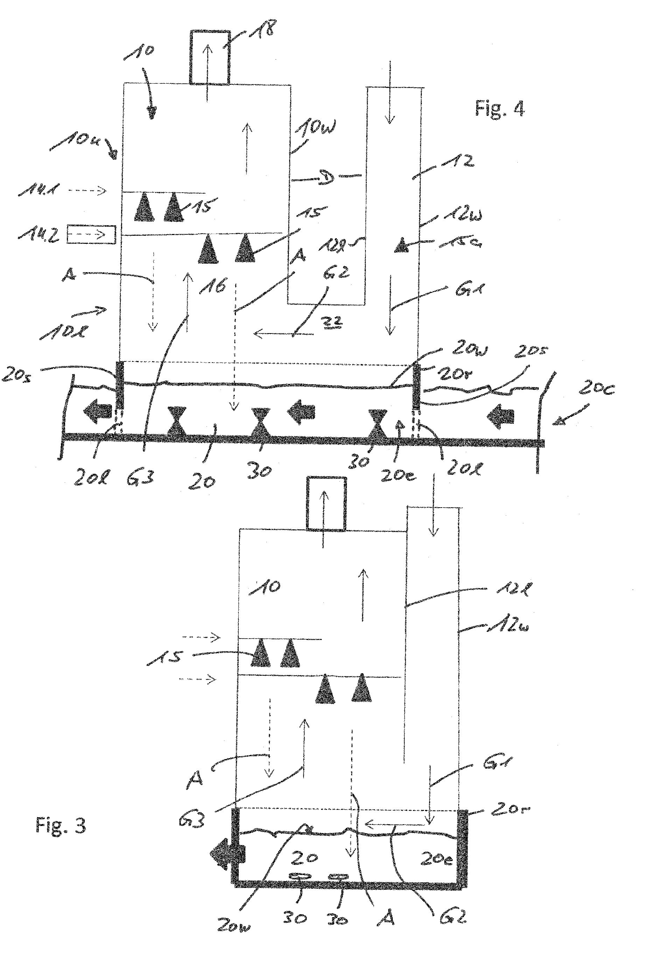

The embodiment of Fig. 4 is similar to that of Fig. 1 witch the proviso that the collecting reservoir 20 is designed as part of a running channel 20c, Fresh seawater is transported along said channel 20c from the right through the extension 20e and the main collecting reservoir 20 to the left.

To allow the seawater to flow along said channel 20c the lower parts 201 of corresponding wall sections 20s of the reservoir 20,20e are designed such as to provide corresponding passageways, In the embodiment shown, wall sections 20s are constructed as vertical columns, arranged at a distance to each other.

Used seawater absorbent falls (by gravity) into the channel 20e (reservoir 20) after leaving the contact space 20 and the same may apply from the flue gas duct 12 and/or the passage 22 in case of additional nozzles 15a being installed there.

Aeration means 30, designed as plate aerators, have been installed in collecting reservoir 20 for the aeration of the used liquid absorbent, collected in said reservoir, before being discharged by said channel 20c (on the left in Fig. 4).

The embedment of Fig. 2 differs from the one of Fig. 1 insofar as there is no distance between flue gas duct 12 and scrubber tower 10 and all four sides of the flue gas duct 12 are continued up to the level of rim 20r of collecting reservoir 20, 20e. In this embodiment the flue gas makes a U-turn on its way from the flue gas duct 12 via extension 20e (the space between liquid level 20w and level of rim 20r) of reservoir 20 into scrubbing tower 10.

The embodiment of Fig. 3 is slightly different to that of Fig. 2 insofar as the left wall 12l of flue gas duct 12 is shortened (similar to the embodiment of Fig. 1) so that there is more space for the flue gas to flow from the outlet opening at the lower end of flue gas duct 12 into the adjacent scrubbing tower 10, but again after being deviated along extension 20e of collecting reservoir 20.

## Claims

1. A flue gas purification device comprising the following features:
a) a scrubber tower (10)
b) at least one flue gas duct (12) to supply the flue gas into a lower part (10l) of the scrubber tower (10),
c) at least one fluid absorbent line (14.1, 14.2) to supply the fluid absorbent into an upper part (10u) of the scrubber tower (10),
d) at least one contact space (16) for said flue gas and said fluid absorbent within said lower and/or upper part (10u) of the scrubber tower (10),
e) a flue gas exit (18), extending from the upper part (10u) of the scrubber tower (10),
f) a collecting reservoir (20) for said used fluid absorbent, arranged beneath and in fluidic connection with said contact space (16),
g) the collecting reservoir (20) provides an extended section (20e), which horizontally extends over the contact space (16),
h) the flue gas duct (12) is arranged such that the flue gas, released from the flue gas duct (12), is directed downwardly toward the extended section (20e) of the collecting reservoir (20) before being redirected and entering into said contact space (16) within the scrubber tower (10).

2. The flue gas purification device according to claim 1, wherein the flue gas duct (12) extends downwardly up to the collecting reservoir (20).

3. The flue gas purification device according to claim 1, wherem the main part of the flue gas duct (12) extends in a substantially vertical direction alongside the scrubber tower (10).

4. The flue gas purification device according to claim 1, wherein the main part of the flue gas duct (12) extends at a distance to and alongside the scrubber tower (10).

5. The flue gas purification device according to claim 1, wherein the flue gas duct (12) has a rectangular cross-section with three long sides (12w) and one side (12l), shortened at a lower end of the flue gas duct (12), being the side closest to the contact space (16).

6. The flue gas purification device according to claim 5, wherein with three long sides (12w) are mounted on an upper outer rim (20r) of the collecting reservoir (20).

7. The flue gas purification device according to claim 1, wherein the flue gas duct (12) is made of metal.

8. The flue gas purification device according to claim 1, wherein the collecting reservoir (20) is made of concrete.

9. The flue gas purification device according to claim 1, wherein the collecting reservoir (20) is designed as a discrete basin.

10. The flue gas purification device according to claim 1, wherein the collecting reservoir (20) is designed as part of a flow-through channel (20c),

11. The flue gas purification device according to claim 1, wherein the fluid absorbent line (14.1, 14.2) leads to spray nozzles (15).

12. The flue gas purification device according to claim 1, comprising means (15a) for distributing the fluid absorbent within the flue gas duct (12).

13. The flue gas purification device according to claim 1, wherein the collecting reservoir (20) extends at least over a horizontal cross section, corresponding to the horizontal cross section of the scrubber tower (10) plus the horizontal cross-section of flue gas duct(12).

14. The flue gas purification device according to claim 1, wherein the scrubber tower (10) and the flue gas duct (12) extend vertically from said collecting reservoir.

15. The flue gas purification device according to claim 1, wherein the collecting reservoir (20) comprises aeration means (30) for said fluid absorbent.
